**Europäisches Patentamt**

**European Patent Office**

**Office européen des brevets**

(19)

(11) Veröffentlichungsnummer: **0 163 821**
A1

(12) # EUROPÄISCHE PATENTANMELDUNG

(21) Anmeldenummer: **85102903.3**

(22) Anmeldetag: **13.03.85**

(51) Int. Cl.⁴: **C 02 F 7/00,** C 02 F 3/20

(30) Priorität: **02.05.84 DE 8413384 U**

(43) Veröffentlichungstag der Anmeldung: **11.12.85**
**Patentblatt 85/50**

(84) Benannte Vertragsstaaten: **AT BE DE FR IT LU**

(71) Anmelder: **Passavant-Werke AG & Co. KG,
D-6209 Aarbergen 7 (DE)**

(72) Erfinder: **Muskat, Josef, Dr. rer. nat., Auf dem Langwehr,
D-6209 Aarbergen 2 (DE)**
Erfinder: **Schmelz, Wolfgang, Römerstrasse 29,
D-5428 Nastätten (DE)**

(74) Vertreter: **Glawe, Delfs, Moll & Partner Patentanwälte,
Postfach 26 01 62 Liebherrstrasse 20,
D-8000 München 26 (DE)**

(54) **Vorrichtung zum Belüften von Abwasserbecken und -teichen.**

(57) Eine Vorrichtung zum Belüften von Abwasserklärbecken, insbesondere Klärteichen besteht aus einer als Ganzes in das Becken einsetzbaren bzw. aus ihm herausnehmbaren Baueinheit mit einem Druckluft erzeugenden, unter Wasser angeordneten Kompressor (5) mit über den Flüssigkeitsspiegel hochgezogenem Luftansaugrohr (6) und einem vom Kompressor mit Druckluft beaufschlagten Verteilerrohr (2), an welches ein oder mehrere poröse Begasungskörper (3) angeschlossen sind, wobei der Kompressor unmittelbar auf das Verteilerrohr aufgesetzt und mit diesem zu einer selbsttragenden Baueinheit verbunden ist. Das Druckrohr (7) des Kompressors ist in einer Schleife über Wasser geführt und dann erst zum Begasungskörper (3) bzw. Verteilerrohr (2) gezogen.

Passavant-Werke AG & Co. KG
6209 Aarbergen 7

Vorrichtung zum Belüften von Abwasserbecken und -teichen
-----------------------------------

Beschreibung
------------------------

Die Erfindung bezieht sich auf eine Vorrichtung zum Belüften von Abwasserklärbecken, insbesondere Klärteichen, bestehend aus einer als Ganzes in das Becken einsetzbaren bzw. aus ihm herausnehmbaren Baueinheit, die einen Druckluft erzeugenden, unter Wasser angeordneten Kompressor mit über den Flüssigkeitsspiegel hochgezogenem Luftansaugrohr und ein vom Kompressor mit Druckluft beaufschlagtes Verteilerrohr aufweist, an welches ein oder mehrere poröse Begasungskörper angeschlossen sind.

Zum biologischen Abbau von Abwasserinhaltsstoffen muß dem in Klärbecken vorhandenen Belebtschlamm ständig Sauerstoff zugeführt werden. Dies geschieht unter anderem durch Einbringen feinster Luftblasen vom Boden der Becken her. Die porösen Begasungskörper werden hierzu von einem Kompressor mit Druckluft versorgt.

Schwierigkeiten bereitet die Versorgung von sogenannten Klärteichen mit Luftsauerstoff. Das Abwasser wird in diesen Klärteichen nicht umgewälzt. Es ergibt sich lediglich auf Grund der Aufstiegsströmung des Blasenvorhangs eine langsame Umschichtung des Abwassers.

Klärteiche haben mitunter große Abmessungen. Die punkt- oder linienförmige Einbringung des Luftsauerstoffs erfolgt von Einzelaggregaten aus, die oft einen großen Abstand vom Teichrand haben. Für Reparatur- und Wartungsarbeiten müssen die Aggregate aus dem Teich herausgehoben werden. Da sie an einem gemeinsamen Kompressor angeschlossen sind, sind lange Zuleitungen für die Druckluft notwendig. Bei Wartungsarbeiten müssen die Aggregate an den Zuleitungen angeschlossen bleiben, bis die Aggregate über Wasser sind, weil sie sonst voll Wasser laufen würden. Um dieses Problem zu lösen, wurde schon vorgeschlagen (DE-GM 83 17 605), von der am Teichrand fest verlegten Verteilleitung Schläuche zu den Belüftungsaggregaten zu führen, wobei die Belüftungsaggregate mit Fahrgestellen versehen wurden, mit denen sie in auf der Teichböschung verlegten Schiehen verschiebbar waren. Mit einer solchen Anordnung ist der Nachteil eines hohen Aufwands verbunden. Außerdem kann der Schlamm in dem Klärteich so hoch ansteigen, daß die Schienen bedeckt sind. Das Belüftungsaggregat kann dann überhaupt nicht mehr herausgezogen werden.

Eine andere vorbekannte Belüftungseinrichtung (DE-GM 82 11 192) besteht aus einem von Schwimmern getragenen, das ganze Becken überspannenden Gestell, das mittels eines Seils längs durch das Belüftungsbecken bewegt werden kann. An dem Gestell sind unter Wasser Drucklufterzeuger befestigt, deren Luftansaugrohre bis über die Wasseroberfläche hogezogen sind. Die Rohre des Gestells dienen dabei der Luftleitung zu den an einem Verteilrohr unten angehängten Begasungskörpern. Eine solche Einrichtung läßt sich jedoch in Klärteichen mit großen Abmessungen nicht anwenden, weil dort das Gestell unvertretbar große Ausmaße annehmen und der Aufwand für die Verschiebeeinrichtung zu groß werden würde.

Die Erfindung hat den Zweck, eine für die Teichbelüftung geeignete Vorrichtung zur Verfügung zu stellen.

Ausgehend von aus dem Stand der Technik bekannten Einrichtungen mit unter Wasser angeordneten Kompressoren wird die Aufgabe darin gesehen, eine kompakte, zur stationären Anbringung in einem Belüftungsteich geeignete Belüfungseinheit zu schaffen.

Gemäß der Erfindung wird die genannte Aufgabe dadurch gelöst, daß der Kompressor unmittelbar auf das Verteilerrohr aufgesetzt und mit diesem zu einer selbsttragenden Baueinheit verbunden ist.

Dadurch ergibt sich eine sehr kompakte Einheit, die z.B. mittels eines Auslegerkrans direkt an den Einsatzort versetzt werden kann. Als Zuleitung ist nur noch ein Stromkabel notwendig, das vorzugsweise in die über Wasser gezogene Ansaugleitung eingeführt und in dieser nach unten verlegt wird, so daß dort kein wasserdichter Abschluß notwendig ist.

Die kompakte Belüfereinheit kann in zwei Ausführungsformen angeboten werden: als stehendes Gerät und als schwimmende Vorrichtung. Bei dem stehenden Gerät wird man vorteilhafterweise an das die Begasungskörper aufnehmende Verteilerrohr einenends eine Traverse ansetzen und die beiden Enden der Traverse und das gegenüberliegende Ende des Verteilerrohrs mit Stützfüßen versehen. Dies ergibt eine stabile Dreipunktabstützung.

Bei der schwimmenden Ausführungsform sind die Schwimmer vorzugsweise an dem Luftansaurohr befestigt. Um den aufsteigenden Blasenstrom in die Horizontale umzulenken, können die Schwimmer Keilform erhalten.

Die bei den Begasungskörpern verwendeten perforierten Schläuche sind zwar verstopfungssicher und im wesentlichen wasserdicht. Durch Undichtigkeiten anderer Art könnte aber bei Ausfall des Kompressors Wasser in den Kompressor und den Motor gelangen, was unter allen Umständen verhindert werden muß. Es wird daher neuerungsgemäß vorgeschlagen, das Druckrohr vom Kompressor erst noch in der Schleife über Wasser zu führen und dann erst an die Begasungskörper anzuschließen. Das Wasser steigt dann in dem abwärts gerichteten Teil der Schleife bis zum Wasserspiegel, kann aber nicht in den Kompressor gelangen. Die über Wasser liegende Schleife wird dabei genau über dem Schwerpunkt der Vorrichtung angeordnet, so daß die Vorrichtung an dieser Schleife aufgehängt und versetzt werden kann.

Weitere vorteilhafte Ausgestaltungen gehen aus zwei Ausführungsbeispielen hervor, die in der Zeichnung dargestellt sind. Es zeigen:

Fig. 1     eine erste Ausführungsform in perspektivischer Darstellung,

Fig. 2     die Ausführungsform von Fig. 1 in Seitenansicht,

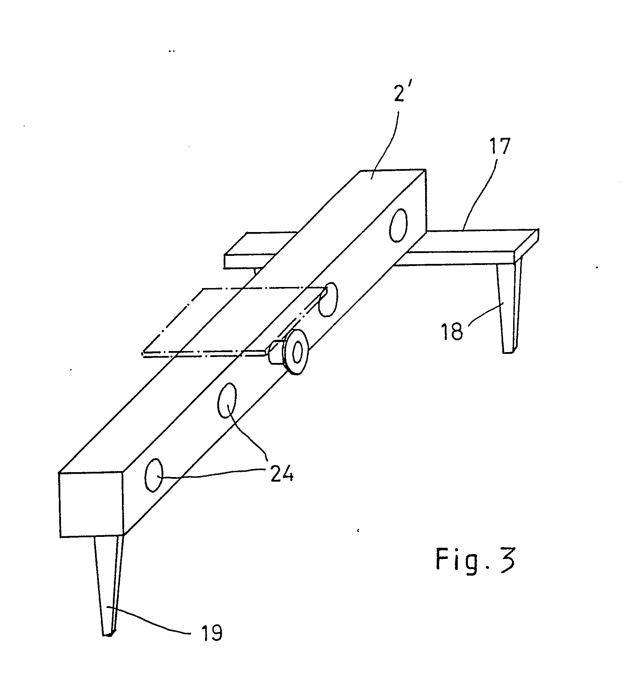

Fig. 3     eine zweite Ausführungsform mit Stützfüßen.

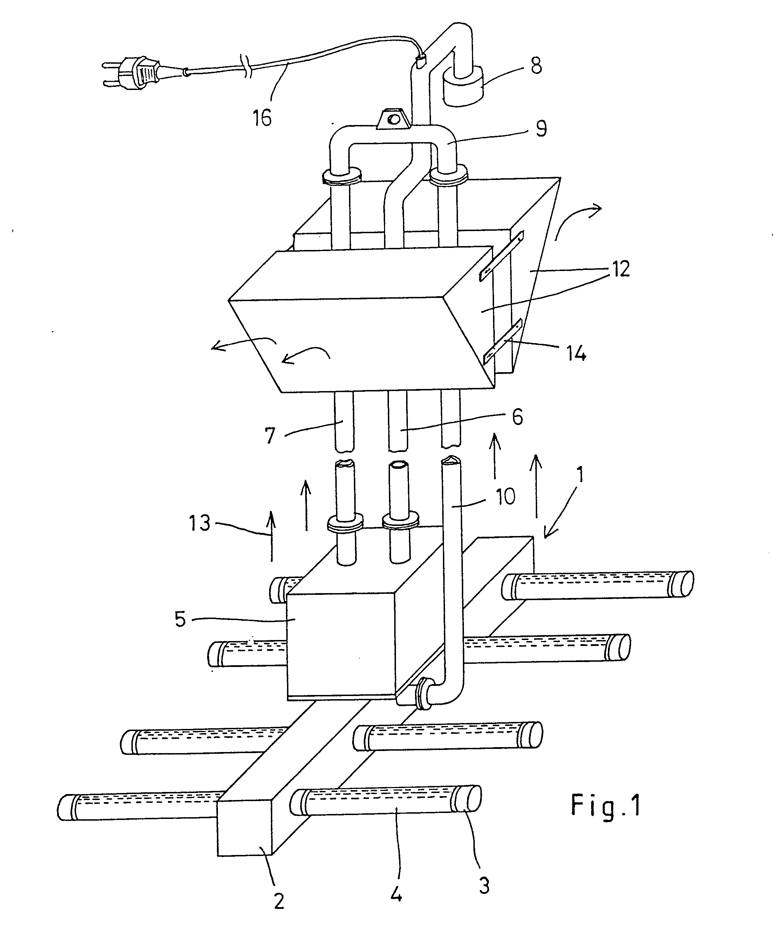

Der Begasungskörper 1 der Bauform nach Fig. 1 besteht aus einem mittigen Verteilerrohr 2 und mehreren seitlich angesetzten Belüfterrohren 3 mit perforiertem Schlauchüberzug 4. Direkt an das Verteilerrohr 2 angeschlossen ist ein Gehäuse 5, das den Kompressor und den Antriebsmotors enthält. Von diesem Gehäuse 5 sind die Ansaugleitung 6 und die Druckleitung 7 nach oben geführt. Die Ansaugleitung 6 endet über dem Wasserspiegel 11 in einem Ansaugfilter 8, während die Druckleitung 7 in einer Schleife 9 und einem absteigenden Ast 10 wieder nach unten zum Verteilerrohr 2 geführt ist. Die Anschlüsse am Gehäuse 5, am Verteilerrohr 2 und an der Schleife 9 sind als Flanschverbindungen ausgebildet, so daß die Vorrichtung durch Einfügen verschieden langer Rohrstücke an unterschiedliche Wassertiefen angepaßt werden kann.

An den beiden Ästen 7, 10 der Druckleitung sind im oberen Bereich Schwimmer 12 befestigt. Sie haben eine nach unten konisch zulaufende Keilform, so daß der von den Belüfterrohren 3 aufsteigende Blasenstrom 13 seitlich umgelenkt wird. Die Schwimmer 12 sind mittels Spannbänder 14 höhenverstellbar an den Rohren angeklemmt, so daß der Abstand der Belüfterrohre 3 vom Beckenboden beliebig eingestellt werden kann.

Das Stromkabel 16 für den Antriebsmotor des Kompressors ist in das über Wasser liegende Ende des Ansaugrohres 6 eingeführt und verläuft innerhalb des Rohres bis in das Unterwassergehäuse 5. Dadurch wird eine wasserdichte Einführung gespart.

Nicht dargestellt sind die Spannseile, mit denen die Schwimmvorrichtung an Ort und Stelle gehalten und mit deren Hilfe sie zu Wartungs- und Reparaturarbeiten an den Rand gezogen werden kann. Ferner ist die Luftführung innerhalb des Unterwassergehäuses 5 nicht gezeigt, die der Kühlung des Antriebsmotors und des Kompressors dient.

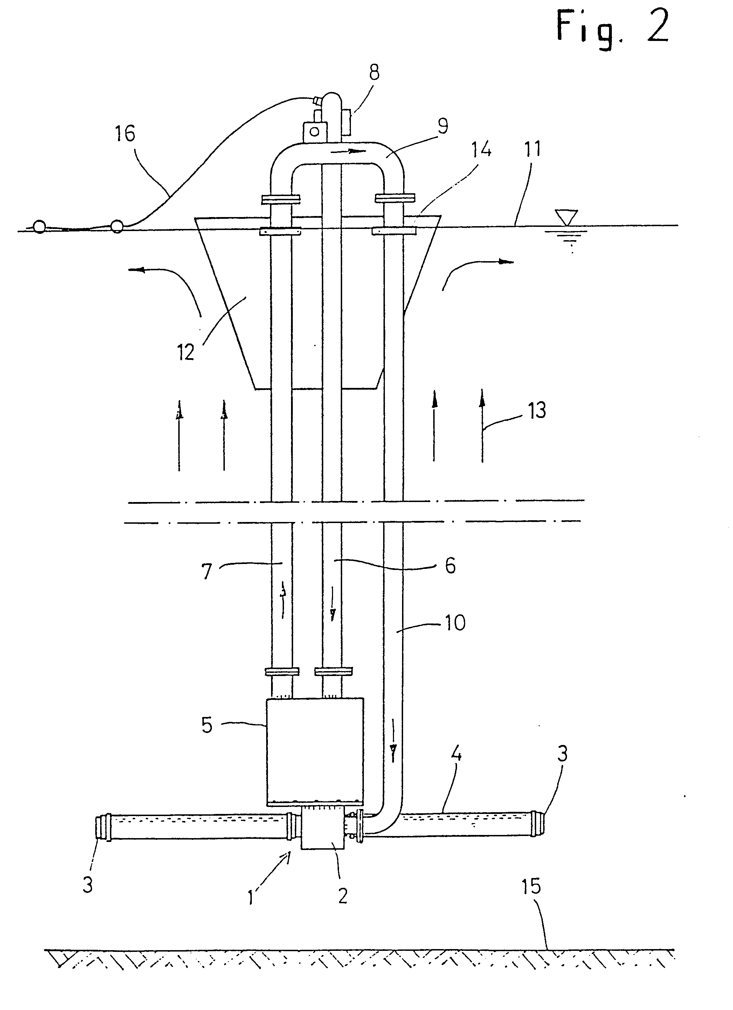

Bei der Ausführungsform nach Fig. 2 ist nur das Verteilerrohr 2' dargestellt, die Öffnungen 24 für die Belüfterrohre sind bereits angebracht. Das Verteilerrohr, das zu einer versetzbaren Baueinheit gehört, besitzt an einem Ende eine Traverse 17, die mit zwei Stützfüßen 18 versehen ist. Das gegenüberliegende Ende des Verteilerrohres trägt den dritten Stützfuß.

Passavant-Werke AG & Co. KG
6209 Aarbergen 7

Vorrichtung zum Belüften von Abwasserbecken und -teichen
------------------------------------

P a t e n t a n s p r ü c h e
------------------------------------

1. Vorrichtung zum Belüften von Abwasserklärbecken, insbesondere Klärteichen, bestehend aus einer als Ganzes in das Becken einsetzbaren bzw. aus ihm herausnehmbaren Baueinheit, die einen Druckluft erzeugenden, unter Wasser angeordneten Kompressor mit über den Flüssigkeitsspiegel hochgezogenem Luftansaugrohr und ein vom Kompressor mit Druckluft beaufschlagtes Verteilerrohr, an welches ein oder mehrere poröse Begasungskörper angeschlossen sind, aufweist,
dadurch g e k e n n z e i c h n e t , daß der Kompressor (5) unmittelbar auf das Verteilerrohr (2) aufgesetzt und mit diesem unmittelbar zu einer selbsttragenden Bau-

- 1 -

einheit verbunden ist.

2. Belüftungsvorrichtung nach Anspruch 1, dadurch g e k e n n z e i c h n e t , daß an das längslaufende Verteilerrohr (2) an einem Ende eine Traverse angesetzt ist, und daß die beiden Enden dieser Traverse und das gegenüberliegende Ende des Verteilerrohres mit Stützfüßen versehen sind.

3. Belüftungsvorrichtung nach Anspruch 1 oder 2, dadurch g e k e n n z e i c h n e t , daß das Druckrohr (7) des Kompressors (5) in einer Schleife (9) über Wasser geführt und dann erst zum Begasungskörper (3) bzw. Verteilerrohr (2) gezogen ist.

4. Belüftungsvorrichtung nach Anspruch 3, dadurch g e k e n n z e i c h n e t , daß die über Wasser liegende Schleife (9) genau über dem Schwerpunkt der Vorrichtung angeordnet und als Aufhängeöse ausgebildet ist.

5. Belüftungsvorrichtung nach einem der vorstehenden Ansprüche, dadurch g e k e n n z e i c h n e t , daß der Kompressor von einem Gehäuse (5) umgeben ist, das solche Leiteinrichtungen aufweist, daß die angesaugte Luft den Motor und/oder den Kompressor kühlend umspült.

0163821

6. Belüftungsvorrichtung nach einem oder mehreren der Ansprüche 1, 3 bis 5, dadurch g e k e n n z e i c h - n e t , daß an der Druckrohrschleife (9) und/oder dem Ansaugrohr (6) Schwimmer (12) befestigt sind.

7. Belüftungsvorrichtung nach Anspruch 6, dadurch g e k e n n z e i c h n e t , daß die Schwimmer (12) in einer Höhe befestigt sind, in der Druckrohrschleife (9) und Ansaugöffnung mit geringem Abstand über der Wasseroberfläche (11) liegen.

8. Belüftungsvorrichtung nach Anspruch 6 oder 7, da-durch g e k e n n z e i c h n e t , daß die Schwimmer (12) eine Keilform haben zum Umlenken der die Gasblasen enthaltenden Aufstiegsströmung (13) in die Horizontale.

9. Belüftungsvorrichtung nach einem oder mehreren der vorstehenden Ansprüche, dadurch g e k e n n z e i c h - n e t , daß das Stromzuleitungskabel an dem über Wasser liegenden Ende in das Luftansaugrohr (6) eingeführt und in diesem nach unten zum Kompressor (5) verlegt ist.

- 3 -

0163821

Fig.1

0163821
Fig. 2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | CH-A- 493 263 (STENBERG-FLYGT) <br><br> * Spalte 4, Zeilen 1-30,41-48,54-63 * | 1,3,4, 6,7 | C 02 F 7/00 <br> C 02 F 3/20 |
| Y | EP-A-0 089 465 (A. BLUM) <br> * Seite 4, Zeilen 1-34 * | 1,3 | |
| A | US-A-4 229 302 (CLEVEPAK) <br> * Spalte 3, Zeile 11 - Spalte 4, Zeile 40 * | 1 | |
| A | DE-A-2 649 500 (A.H. LAURIE) <br><br> * Figur 4 * | | |
| | ----- | | RECHERCHIERTE SACHGEBIETE (Int. Cl.4) <br><br> C 02 F |

Der vorliegende Recherchenbericht wurde für alle Patentansprüche erstellt.

| Recherchenort | Abschlußdatum der Recherche | Prüfer |
|---|---|---|
| DEN HAAG | 19-08-1985 | TEPLY J. |